# EUROPEAN PATENT SPECIFICATION

(11) **EP 4 073 011 B1**
(45) Date of publication and mention of the grant of the patent: **18.06.2025**
(21) Application number: 20817392.2
(22) Date of filing: 08.12.2020
(51) Int. Cl.: C03C 25/32, C02F 1/00, C03C 25/12, C03C 25/28

(54) **METHOD FOR PRODUCING MINERAL WOOL COMPOSITES**
VERFAHREN ZUR HERSTELLUNG VON MINERALWOLLVERBUNDWERKSTOFFEN
PROCÉDÉ DE PRODUCTION DE COMPOSITES DE LAINE MINÉRALE

(30) Priority: 10.12.2019 EP 19306614
(43) Date of publication of application: 19.10.2022
(73) Proprietor: SAINT-GOBAIN ISOVER, 92400 Courbevoie (FR)
(72) Inventor: IKEDA, Mizuki, 78500 Sartrouville (FR)
(74) Representative: Saint-Gobain Recherche
(86) International application number: PCT/EP2020/085063
(87) International publication number: WO 2021/116097

(56) References cited:
- EP-A1- 3 156 468
- US-A1- 2010 192 636
- US-A1- 2011 200 814

## Description

### Technical Field

The present invention relates to a method for producing mineral wool composites, in particular relates to a method for producing mineral wool composites whereby circulating water used in a production apparatus for producing mineral wool composites is reused in the production apparatus. More specifically, the invention relates to a method for producing mineral wool composites wherein part of circulating water is extracted and used as the raw material for a binder composition, whereby the target quality for the mineral wool composites can be obtained even when the type of binder composition is changed, and without disposing of large amounts of circulating water.

### Background Art

As disclosed in JP2009-155172A, methods for producing mineral wool composites are known, such as the one described in Japanese Unexamined Patent Publication No. 2009-155172, that comprises blowing out molten inorganic materials at high temperature from a spinner by centrifugal force to obtain mineral fibers, and spraying a binder composition onto the mineral fibers to cohere the mineral fibers and obtain mineral wool composites. Binder compositions include aqueous dispersions of binder resins such as phenol resins and acrylic resins.

When producing mineral wool composites, water is used in large amounts for washing of production apparatuses. WO2009/007648A and US8821625B disclose methods in which circulating water used during the process of producing mineral wool composites is circulated and US2010192636 relates to a method and a device for recycling the water recovered in a fiberizing and forming process when an acid binder, typically comprising a polyacid of the acrylic type, is used. EP3516468 relates to an aqueous mixed binder composition and a method for binding fibrous materials by using the same, and more specifically, relates to an aqueous mixed binder composition comprising a) one or more reducing sugars, b) one or more amino acids, and c) one or more condensed products formed by combining amide-based compound or phenol-based compound with formaldehyde, and a method for binding fibrous materials by using the same. US2011200814 relates generally to the processes for manufacture of fibrous insulation products, and more particularly, to biocides or biocidal agents useful for killing unwanted organisms associated with bio-based binders in manufacturing fiberglass insulation products.

### Summary of Invention

### Technical Problem

Such circulating water that is reused during the process of producing mineral wool composites contains the binder resin resulting from the binder composition. On the other hand, part of the circulating water may be extracted and the extracted circulating water reused as raw material for the binder composition.

However, in methods wherein part of circulating water is extracted and used as raw material for the binder composition, it is necessary to dispose of large amounts of circulating water when the type of binder composition is changed during continuous production of the mineral wool composites. This is because, when the circulating water containing the binder resin before the change is used as raw material for preparing the binder composition after the change, the quality of the mineral wool composites produced using the changed binder composition can be adversely affected.

The present invention provides a method for producing mineral wool composites in which a part of circulating water is extracted and used as raw material for a binder composition, whereby when the type of binder composition is changed, it is possible to obtain the target quality of the mineral wool composites without disposing of a large amount of circulating water.

### Solution to Problem

The present inventors have found that the problem can be solved by an invention having the following aspects.
[1] A method for producing mineral wool composites, in which circulating water used for cleaning a production apparatus for producing mineral wool composites is filtered to reuse the circulating water in the production apparatus, the method comprising the following steps (a) to (c) in this order:
   (a) producing a first mineral wool composite by extracting at least part of the circulating water to prepare a first binder composition containing the extracted circulating water and then spraying the first binder composition onto mineral fibers, while providing clean water to the circulating water;
   (b) conducting the following substeps (b1) and (b2) in any order or at the same time,
      (b1) pausing extraction of the circulating water for preparation of the first binder composition;
      (b2) extracting at least part of the circulating water to store the extracted circulating water in a first tank;
   (c) producing a second mineral wool composite by extracting at least part of the circulating water to prepare a second binder composition containing the extracted circulating water and then spraying the second binder composition onto mineral fibers, while providing clean water to the circulating water.
[2] The method of [1], wherein the step (b) is conducted while producing the first mineral wool composite and/or the second mineral wool composite.
[3] The method of [1] or [2], wherein the step (b) comprises conducting the following substep (b3), as well as substeps (b1) and (b2), in any order or at the same time:
   (b3) providing clean water to prepare the first or second binder composition comprising the clean water.
[4] The method of any one of [1] to [3], wherein the step (b) comprises conducting the following substep (b4), as well as substeps (b1) and (b2), in any order or at the same time:
   (b4) pausing provision of the clean water to the circulating water.
[5] The method of any one of [1] to [4], wherein the step (c) further comprises the following substep (c1):
   (c1) providing the water stored in the first tank to the circulating water.
[6] The method of any one of [1] to [5], wherein the step (c) further comprises the following substep (c2):
   (c2) providing the water stored in the first tank and the circulating water to prepare the second binder composition.
[7] The method of any one of [1] to [6], wherein the method comprises, after step (c), an additional step (d) in which the following substeps (d1) and (d2) are carried out in any order or at the same time,
   (d1) pausing extraction of the circulating water for preparation of the second binder composition;
   (d2) extracting at least part of the circulating water to store the extracted circulating water in a second tank.
[8] The method of [7], wherein the first and second tanks are the same tank.
[9] The method of [7], wherein the first and second tanks are separate tanks.
[10] The method of any one of [7] to [9], wherein the method further comprising the following step after step (d):
   (a)' producing a third mineral wool composite by extracting at least part of the circulating water to prepare a third binder composition containing the extracted circulating water and then spraying the third binder composition onto mineral fibers, while providing clean water to the circulating water.
[11] The method of [10], wherein the third binder composition and the third mineral wool composite are the same as the first binder composition and the first mineral wool composite, respectively.
[12] The method of [1] to [11], wherein one of the binder compositions are selected from aqueous compositions selected from:
   a composition comprising phenol/formaldehyde condensates or
   phenol/formaldehyde and urea/formaldehyde condensates;
   a composition comprising Maillard reactants including an amine and a carbohydrate, in particular a reducing;
   a composition comprising acrylic polymers and a cross-linking agent such as polyhydroxyl or polyamino compounds;
   a composition comprising a non-reducing sugar and/or a hydrogenated sugar, and a polycarboxylic reactant such as citric acid; and
   a composition comprising an amino-amide compound resulting in particular from the reaction of an anhydride with alkanolamine.
[13]. The method of [1] to [12], wherein one of binder composition results in a lightly colored or white binder.

### Brief Description of Drawings

Fig. 1 is a drawing illustrating the flow of liquid in a step included in the basic construction of the method of the invention.
Fig. 2 is a drawing illustrating the flow of liquid in substep (b3) which is preferably included in step (b) included in the method of the invention.
Fig. 3 is a drawing illustrating the flow of liquid in substep (b4) which is preferably included in step (b) included in the method of the invention.
Fig. 4 is a drawing illustrating the flow of liquid in substep (c1) which is preferably included in step (c) included in the method of the invention.
Fig. 5 is a drawing illustrating the flow of liquid in substep (c2) which is preferably included in step (c) included in the method of the invention.

### Description of Embodiments

The invention relates to a method for producing mineral wool composites in which circulating water used for washing of a production apparatus for mineral wool composites is filtered and reused in the production apparatus, the method including the following steps (a) to (c) in this order:
(a) providing clean water to the circulating water while at least part of the circulating water is extracted to prepare a first binder composition containing the extracted circulating water, and spraying the first binder composition onto mineral fibers to produce a first mineral wool composite,
(b) conducting the following substeps (b1) and (b2) in any order or at the same time:
   (b1) pausing extraction of the circulating water for preparation of the first binder composition, and
   (b2) extracting at least part of the circulating water to store it in a first tank,
(c) providing clean water to the circulating water while at least part of the circulating water is extracted to prepare a second binder composition containing the extracted circulating water, and spraying the second binder composition onto mineral fibers to produce a second mineral wool composite, wherein the first binder composition and the second binder composition are different from each other.

It is not necessary to conduct each operation of each step of the invention at all times during the step, as each operation need only be conducted at least once at the preferred timing during the step.

The arrows in the drawings indicate flow of liquids such as circulating water, clean water, water stored in the tank, and the first and second binder compositions, but flow of liquids not shown in the drawings may also be present in each step. Also, the flow of liquids in each step shown in the drawings need not be present in the step, so long as the advantageous effect of the invention is obtained.

In the method of the invention, it is not necessary to dispose of large amounts of circulating water when switching from production of the first mineral wool composite to the second mineral wool composite. In a method for producing mineral wool composites in which circulating water used for washing of the production apparatus is reused for preparation of a binder composition, resins such as that of the binder that have been washed out by the washing will contaminate the circulating water, and it is therefore often necessary to dispose of the circulating water when switching to production of a mineral wool composite that utilizes a different binder composition. For example, since reaction may take place between the binder compositions before and after switching, and the color of the mineral wool composite may be an unacceptable color after switching if the binder compositions before and after switching have different colors, the circulating water including the binder resin before switching must be disposed of so that the quality of the mineral wool composite after switching is within the allowable range.

In the method of the invention, circulating water including the binder resin before switching is stored in a tank and reused, thereby allowing disposal of the circulating water to be reduced to a minimum. For example, circulating water including the binder resin before switching, that has been stored in a tank, may be gradually mixed with circulating water to be used for production of the mineral wool composite after switching, in a range such that the quality of the mineral wool composite after switching is acceptable, or it may be stored for use during subsequent production of a mineral wool composite including the binder composition before switching.

In the method of the invention, the circulating water is used for washing of the production apparatus for the mineral wool composite and for preparation of the binder composition. The production apparatus to be washed may be a conveyor or the like, on which there have been accumulated mineral fibers sprayed with a binder composition. Since such a production apparatus can potentially contain adhered material from the binder composition, the washing water after washing of the adhered material includes components from the binder composition. When the circulating water is to be used for preparation of a binder composition, the circulating water may be used as a dispersing medium or solvent for the binder composition.

In the method of the invention, the circulating water is filtered before being reused. The filtration may be carried out by a known method such as screen filtration or ultrafiltration. The filtration does not need to be constantly carried out during the method of the invention, and need only be carried out at least once at a desired timing while the method of the invention is being carried out.

A biocide agent, such as monochloramine, may be added to the circulated water, preferably after the filtration. The quantity of biocide agent added to the circulating water depend on the configuration of the circulating circuit and the binder compositions. The biocide agent is typically added in the circulated water several time a day in an amount of 50 to 500 g/m³ of circulating water.

In the method of the invention, the clean water is water with the lower concentration of components resulting from binder composition than the circulating water. The clean water may be water that essentially contains no component resulting from binder composition, and it may be clean water, deionized water, distilled water, tap water, ground water or industrial water, for example.

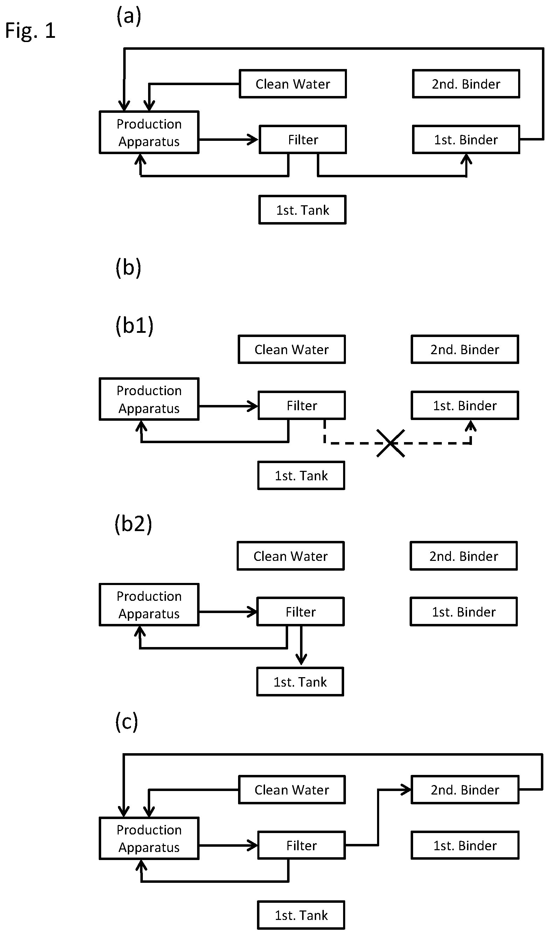

As shown in Fig. 1(a), in step (a), clean water is supplied to the circulating water while at least part of the circulating water is extracted, a first binder composition containing the extracted circulating water is prepared, and the first binder composition is sprayed onto mineral fibers to produce a first mineral wool composite.

In step (a), clean water is provided to the circulating water. For example, as shown in Fig. 1 (a) the clean water may be supplied to the circulating water by recovering after having been used for washing of the production apparatus for the mineral wool composite to mix with other circulating water. Alternatively, not shown, the clean water may be directly supplied to the circulating water. In addition, also not shown, the clean water may be supplied to the circulating water, by preparing of a binder composition and then recovering after the binder composition has been used for production of a mineral wool composite to mix with other circulating water.

In step (a), at least part of the circulating water is extracted and a first binder composition containing the extracted circulating water is prepared. The extracted circulating water may be supplied to the tank for preparation of the binder composition, for preparation of the first binder composition, or it may be mixed with another binder resin, for example, in piping using a static mixer or the like, for preparation of the first binder composition. Additional clean water may also be used for preparation of the first binder composition.

For the method of producing the first mineral wool composite by spraying the first binder composition onto mineral fibers, which is carried out in step (a), reference may be made to methods known in the prior art.

In step (a), if a tank storing previously recovered water is present, the stored water may be used to prepare the first binder composition or to provide circulating water. In such cases, the stored water may be reused so long as the quality of the first mineral wool composite is within the allowable range.

As shown in Fig. 1(b), the following substeps (b1) and (b2) are carried out in step (b), in any order or at the same time:
(b1) pausing extraction of the circulating water for preparation of the first binder composition, and
(b2) extracting at least part of the circulating water to store it in a first tank.

In step (b), preparation is carried out to switch from production of the first mineral wool composite to the second mineral wool composite. Production of the first mineral wool composite may be continued in step (b), or production of the second mineral wool composite may be initiated, or production of the mineral wool composites may be halted.

In substep (b1), if production of the first mineral wool composite is still continuing and a preparation tank for preparation of the first binder composition is present, the first binder composition in the preparation tank may be provided for production of the first mineral wool composite. Also, the first binder composition may be prepared by the following substep (b3), and production of the first mineral wool composite continued.

In substep (b2), circulating water including components from the first binder composition are stored in the first tank, thereby reducing the absolute amount of components from the first binder composition in the circulating water. This allows the components from the first binder composition present in the circulating water to be reduced during production of the second mineral wool composite, so that the quality of the second mineral wool composite can be within the allowable range.

The circulating water stored in the first tank as a result of substep (b2) may be only part of the circulating water, and if the quality of the second mineral wool composite is within the allowable range during its production, the components resulting from the first binder composition may be allowed to reside in the circulating water.

Part of the circulating water may be disposed of in order to reduce the absolute amount of components from the first binder composition in the circulating water.

Step (b) may also include a substep (b3) of providing clean water, and using the clean water instead of the circulating water to prepare the first or second binder composition.

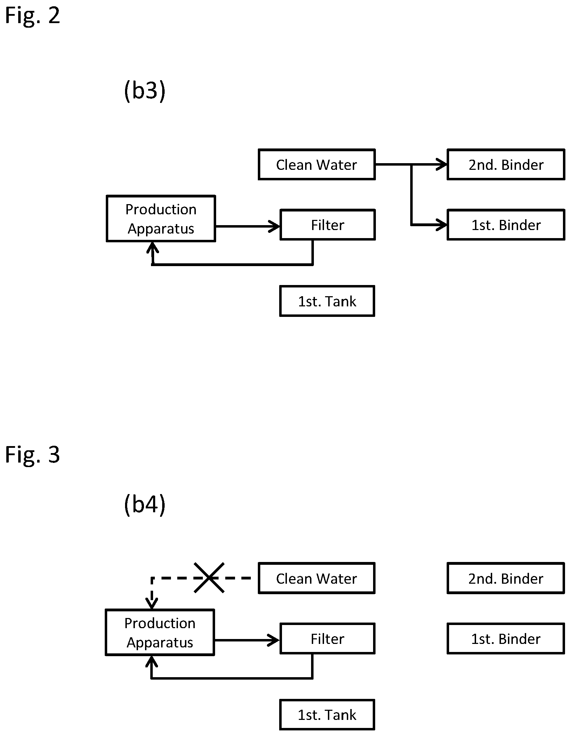

Fig. 2 shows an example of the flow of liquid in substep (b3). While Fig. 2 does not show the flow of the first or second binder composition for production of the first or second mineral wool composite, production of the first mineral wool composite may be continued or production of the second mineral wool composite initiated in substep (b3).

Specifically, when production of the first mineral wool composite is being continued in substep (b3), clean water may be provided for preparation of the first binder composition. Also, when production of the second mineral wool composite is being initiated, clean water may be provided for preparation of the second binder composition.

While extraction of circulating water for preparation of the first binder composition is paused according to substep (b1), clean water may be provided according to substep (b3), continuing preparation of the first binder composition and thereby continuing production of the first mineral wool composite. Also, when production of the second mineral wool composite has been initiated, clean water may be supplied according to substep (b3), the second binder composition prepared, and production of the second mineral wool composite initiated.

Substep (b3) may be carried out before substep (b1) is initiated, and for example, clean water may also be provided for preparation of the first binder composition while the circulating water is being extracted.

In substep (b3), clean water is provided to the tank and mixed with the other raw materials for binder composition, or the clean water may be mixed with the other raw materials for binder composition using a static mixer or the like in the piping, thereby preparing the first or second binder composition.

Step (b) may also include a substep (b4) for pausing supply of the clean water to the circulating water.

Fig. 3 shows an example of the flow of liquid in substep (b4). Since the circulating water including components from the first binder composition is stored in the first tank in substep (b2), the absolute amount of components from the first binder composition in the circulating water is continuously reduced. Consequently, when supply of the clean water to the circulating water is continued, the concentration of the components from the first binder composition continues to decrease, but the amount of circulating water to be stored in the first tank increases correspondingly.

Therefore, in substep (b4), provision of the clean water to the circulating water may be paused in order to maintain a constant concentration of components from the first binder composition in the circulating water stored in the first tank. This will allow the amount of water stored in the first tank to be relatively reduced.

As shown in Fig. 1(c), in step (c), while the clean water is being provided to the circulating water, at least part of the circulating water is extracted, a second binder composition containing the extracted circulating water is prepared, and the second binder composition is sprayed onto the mineral fibers to produce the second mineral wool composite.

Clean water is supplied to the circulating water in step (c) as well, similar to step (a). The clean water may be directly supplied to the circulating water by mixing with the circulating water, or it may be indirectly supplied to the circulating water.

In step (c), the circulating water may be supplied to the tank for preparation of the binder, for preparation of the second binder composition, or the circulating water may be mixed with another binder resin, for example, in piping using a static mixer or the like, for preparation of the second binder composition.

For the method of producing the second mineral wool composite by spraying the second binder composition onto mineral fibers, which is carried out in step (c), reference may be made to methods known in the prior art.

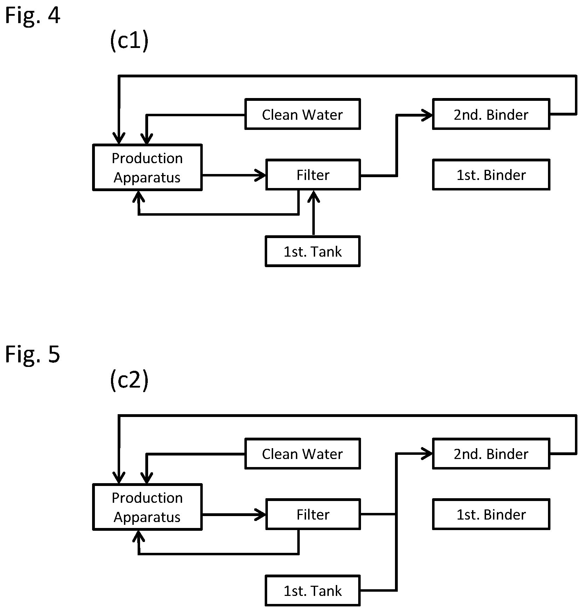

As shown in Fig. 4, step (c) may further include a substep (c1) in which water stored in the first tank by substep (b2) of step (b) is provided to the circulating water and used for washing of the production apparatus.

When substep (c1) is carried out, the water stored in the first tank may be provided to the circulating water in such a manner that the quality of the second mineral wool composite is in the allowable range. The water stored in the first tank can be gradually consumed by substep (c1).

Furthermore, as shown in Fig. 5, step (c) may further include a substep (c2) in which water stored in the first tank by substep (b2) of step (b) is used for preparation of the second binder composition.

When substep (c2) is carried out, the water stored in the first tank may be provided to the circulating water so that the quality of the second mineral wool composite is in the allowable range. The water stored in the first tank can be gradually consumed by substep (c2).

When substep (c2) is carried out, the water stored in the first tank may be reused in such a manner that the quality of the second mineral wool composite is in the allowable range.

In step (c), substeps (c1) and (c2) may be carried out either in any order with or at the same time as other operations.

The method of the invention may further include, after step (c), an additional step (d) in which the following substeps (d1) and (d2) are carried out in any order or at the same time:
(d1) pausing extraction of the circulating water for preparation of the second binder composition, and
(d2) extracting at least part of the circulating water to store it in a second tank.

Step (d) is essentially a step of repeating step (b) above. Therefore, the substeps corresponding to substeps (b3) and (b4) of step (b) may also be included in step (d).

As water that has been stored in the first tank according to substep (b2) is completely consumed in substep (c1) and (c2) of step (c), substep (d2) may be carried out with the same tank for the first tank and second tank.

However, the second tank may instead be a different tank from the first tank.

In the method of the invention, the aforementioned steps (a) to (c) may be repeated after step (d). The repetition of step (a) may be a step (a)' in which third mineral wool composites are produced using not the first binder composition, but rather a third binder composition which is different from the first and second binder compositions.

A person skilled in the art will be able to carry out the repeated steps (a)' to (c)' in the manner described above, for production of any desired type of mineral wool composites using any desired type of binder composition.

The first binder, second binder, and optionally third binder compositions may be aqueous compositions selected from:
(i) a composition comprising phenol/formaldehyde condensates, such as a composition comprising phenol/formaldehyde and urea/formaldehyde condensates, a composition comprising phenol/formaldehyde and phenol/formaldehyde/glycine condensates, or a composition comprising phenol/formaldehyde condensates and free from urea/formaldehyde condensates, as disclosed for example in WO 2008/043960, WO2008/043961 or WO2012/025699;
(ii) a composition comprising Maillard reactants including an amine and a carbohydrate, in particular a reducing sugar, as disclosed for example in WO2007014236;
(iii) a composition comprising acrylic polymers and a cross-linking agent such as polyhydroxyl or polyamino compounds, as disclosed in EP583086, EP990727, EP1741726, US5318990 and US2007/173588;
(iv) a composition comprising a non-reducing sugar and/or a hydrogenated sugar, and a polycarboxylic reactant such as citric acid, as disclosed in WO2009/080938, WO2013/021112 and WO2015/159012; and
(v) a composition comprising an amino-amide compound resulting in particular from the reaction of an anhydride with alkanolamine, as disclosed in WO99/36368, WO01/05725, WO01/96460, WO02/06178, WO2004/007615 and WO2006/061249.

The first binder composition and the second binder composition may be any type of compositions (i) to (v) provided that the second binder composition is a binder composition of a different type from the first binder composition. The method of the present invention is particularly advantageous when one of the binder composition result in a lightly colored, in particular white, binder, such as compositions (iii), (iv), or (v) described above. In a preferred embodiment, the second binder composition results in a lightly colored, in particular white, binder, such as compositions (iii), (iv), or (v), and the first binder composition results in a colored binder such as compositions (i) or (ii). In some particular embodiments, the first and second binder compositions may be respectively of type (i) and (iii), or (i) and (iv), or (i) and (v), or (ii) and (iii), or (ii) and (iv), or (ii) and (v).

## Claims

1. A method for producing mineral wool composites, in which circulating water used for cleaning a production apparatus for producing mineral wool composites is filtered to reuse the circulating water in the production apparatus, the method comprising the following steps (a) to (c) in this order:
(a) producing a first mineral wool composite by extracting at least part of the circulating water to prepare a first binder composition containing the extracted circulating water and then spraying the first binder composition onto mineral fibers, while providing clean water to the circulating water;
(b) conducting the following substeps (b1) and (b2) in any order or at the same time,
(b1) pausing extraction of the circulating water for preparation of the first binder composition;
(b2) extracting at least part of the circulating water to store the extracted circulating water in a first tank;
(c) producing a second mineral wool composite by extracting at least part of the circulating water to prepare a second binder composition containing the extracted circulating water and then spraying the second binder composition onto mineral fibers, while providing clean water to the circulating water,
wherein the first binder composition and the second binder composition are different from each other.

2. The method of claim 1, wherein the step (b) is conducted while producing the first mineral wool composite and/or the second mineral wool composite.

3. The method of claim 1 or 2, wherein the step (b) comprises conducting the following substep (b3), as well as substeps (b1) and (b2), in any order or at the same time:
(b3) providing clean water to prepare the first or second binder composition comprising the clean water.

4. The method of any one of claims 1 to 3, wherein the step (b) comprises conducting the following substep (b4), as well as substeps (b1) and (b2), in any order or at the same time:
(b4) pausing provision of the clean water to the circulating water.

5. The method of any one of claims 1 to 4, wherein the step (c)further comprises the following substep (c1):
(c1) providing the water stored in the first tank to the circulating water.

6. The method of any one of claims 1 to 5, wherein the step (c) further comprises the following substep (c2):
(c2) providing the water stored in the first tank and the circulating water to prepare the second binder composition.

7. The method of any one of claims 1 to 6, wherein the method comprises, after step (c), an additional step (d) in which the following substeps (d1) and (d2) are carried out in any order or at the same time,
(d1) pausing extraction of the circulating water for preparation of the second binder composition;
(d2) extracting at least part of the circulating water to store the extracted circulating water in a second tank.

8. The method of claim 7, wherein the first and second tanks are the same tank.

9. The method of claim 7, wherein the first and second tanks are separate tanks.

10. The method of any one of claims 7 to 9, wherein the method further comprising the following step after step (d):
(a)' producing a third mineral wool composite by extracting at least part of the circulating water to prepare a third binder composition containing the extracted circulating water and then spraying the third binder composition onto mineral fibers, while providing clean water to the circulating water.

11. The method of claim 10, wherein the third binder composition and the third mineral wool composite are the same as the first binder composition and the first mineral wool composite, respectively.

12. The method of any one of claims 1 to 11, wherein one of the binder compositions are selected from aqueous compositions selected from:
(i) a composition comprising phenol/formaldehyde condensates, such as a composition comprising phenol/formaldehyde and urea/formaldehyde condensates, a composition comprising phenol/formaldehyde and phenol/formaldehyde/glycine condensates, or a composition comprising phenol/formaldehyde condensates and free from urea/formaldehyde condensates;
(ii) a composition comprising Maillard reactants including an amine and a carbohydrate, in particular a reducing;
(iii) a composition comprising acrylic polymers and a cross-linking agent such as polyhydroxyl or polyamino compounds;
(iv) a composition comprising a non-reducing sugar and/or a hydrogenated sugar, and a polycarboxylic reactant such as citric acid; and
(v) a composition comprising an amino-amide compound resulting in particular from the reaction of an anhydride with alkanolamine.

13. The method of claim 12, wherein the first binder composition and the second binder composition are selected from aqueous compositions selected from composition of type (i) to (v) provided that the second binder composition is a binder composition of a different type from the first binder composition.

14. The method of any one of claims 12 or 13, wherein the first binder composition is selected from aqueous compositions selected from compositions of type (i) or (ii), and the second binder composition is selected from aqueous compositions selected from compositions of type (iii), (iv), or (v).

15. The method of any one of claims 1 to 14, wherein one of binder composition results in a lightly colored or white binder, preferably the first binder composition results in a colored binder and the second binder composition results in a lightly colored, in particular white, binder.

## Patentansprüche

1. Verfahren zum Produzieren von Mineralwolleverbundwerkstoffen, wobei Umlaufwasser, das zum Reinigen einer Produktionseinrichtung zum Produzieren von Mineralwolleverbundwerkstoffen gefiltert wird, um das Umlaufwasser in der Produktionseinrichtung wieder zu verwenden, das Verfahren umfassend die folgenden Schritte (a) bis (c) in dieser Reihenfolge:
(a) Produzieren eines ersten Mineralwolleverbundwerkstoffs durch Extrahieren von mindestens einem Teil des Umlaufwassers, um eine erste Bindemittelzusammensetzung herzustellen, die das extrahierte Umlaufwasser enthält, und anschließendes Aufsprühen der ersten Bindemittelzusammensetzung auf Mineralfasern, während dem Umlaufwasser sauberes Wasser bereitgestellt wird;
(b) Durchführen der folgenden Teilschritte (b1) und (b2) in beliebiger Reihenfolge oder gleichzeitig,
(b1) Unterbrechen der Extraktion des Umlaufwassers für die Herstellung der ersten Bindemittelzusammensetzung;
(b2) Extrahieren von mindestens einem Teil des Umlaufwassers, um das extrahierte Umlaufwasser in einem ersten Tank zu speichern;
(c) Produzieren eines zweiten Mineralwolleverbundwerkstoffs durch Extrahieren von mindestens einem Teil des Umlaufwassers, um eine zweite Bindemittelzusammensetzung herzustellen, die das extrahierte Umlaufwasser enthält, und anschließendes Aufsprühen der zweiten Bindemittelzusammensetzung auf Mineralfasern, während dem Umlaufwasser sauberes Wasser bereitgestellt wird,
wobei die erste Bindemittelzusammensetzung und die zweite Bindemittelzusammensetzung voneinander unterschiedlich sind.

2. Verfahren nach Anspruch 1, wobei der Schritt (b) während des Produzierens des ersten Mineralwolleverbundwerkstoffs und/oder des zweiten Mineralwolleverbundwerkstoffs durchgeführt wird.

3. Verfahren nach Anspruch 1 oder 2, wobei der Schritt (b) das Durchführen des folgenden Teilschritts (b3) sowie der Teilschritte (b1) und (b2) in beliebiger Reihenfolge oder gleichzeitig umfasst:
(b3) Bereitstellen von sauberem Wasser, um die erste oder die zweite Bindemittelzusammensetzung, umfassend das saubere Wasser, herzustellen.

4. Verfahren nach einem der Ansprüche 1 bis 3, wobei der Schritt (b) das Durchführen des folgenden Teilschritts (b4) sowie der Teilschritte (b1) und (b2) in beliebiger Reihenfolge oder gleichzeitig umfasst:
(b4) Unterbrechen der Bereitstellung von sauberem Wasser an das Umlaufwasser.

5. Verfahren nach einem der Ansprüche 1 bis 4, wobei der Schritt (c) ferner den folgenden Teilschritt (c1) umfasst:
(c1) Bereitstellen des Wassers, das in dem ersten Tank gespeichert ist, an das Umlaufwasser.

6. Das Verfahren nach einem der Ansprüche 1 bis 5, wobei der Schritt (c) ferner den folgenden Teilschritt (c2) umfasst:
(c2) Bereitstellen des Wassers, das in dem ersten Tank gespeichert ist, und des Umlaufwassers, um die zweite Bindemittelzusammensetzung herzustellen.

7. Verfahren nach einem der Ansprüche 1 bis 6, wobei das Verfahren nach Schritt (c) einen zusätzlichen Schritt (d) umfasst, in dem die folgenden Teilschritte (d1) und (d2) in beliebiger Reihenfolge oder gleichzeitig ausgeführt werden,
(d1) Unterbrechen der Extraktion des Umlaufwassers für die Herstellung der zweiten Bindemittelzusammensetzung;
(d2) Extrahieren von mindestens einem Teil des Umlaufwassers, um das extrahierte Umlaufwasser in einem zweiten Tank zu speichern.

8. Das Verfahren nach Anspruch 7, wobei der erste und der zweite Tank derselbe Tank sind.

9. Verfahren nach Anspruch 7, wobei der erste und der zweite Tank separate Tanks sind.

10. Verfahren nach einem der Ansprüche 7 bis 9, wobei das Verfahren ferner den folgenden Schritt nach Schritt (d) umfasst:
(a)' Produzieren eines dritten Mineralwolleverbundwerkstoffs durch Extrahieren von mindestens einem Teil des Umlaufwassers, um eine dritte Bindemittelzusammensetzung herzustellen, die das extrahierte Umlaufwasser enthält, und anschließendes Aufsprühen der dritten Bindemittelzusammensetzung auf Mineralfasern, während dem Umlaufwasser sauberes Wasser bereitgestellt wird.

11. Verfahren nach Anspruch 10, wobei die dritte Bindemittelzusammensetzung beziehungsweise der dritte Mineralwolleverbundwerkstoff dieselben sind wie die erste Bindemittelzusammensetzung beziehungsweise der erste Mineralwolleverbundwerkstoff.

12. Verfahren nach einem der Ansprüche 1 bis 11, wobei eine der Bindemittelzusammensetzungen ausgewählt ist aus wässrigen Zusammensetzungen, ausgewählt aus:
(i) eine Zusammensetzung, umfassend Phenol/Formaldehyd-Kondensate, wie eine Zusammensetzung, umfassend Phenol/Formaldehyd- und Harnstoff/Formaldehyd-Kondensate, eine Zusammensetzung, umfassend Phenol/Formaldehyd- und Phenol/Formaldehyd/Glycin-Kondensate oder eine Zusammensetzung, umfassend Phenol/Formaldehyd-Kondensate, und die frei von Harnstoff/Formaldehyd-Kondensaten ist,
(ii) eine Zusammensetzung, umfassend Maillard-Reaktanten, einschließlich eines Amins und eines Kohlenhydrats, insbesondere eines reduzierenden;
(iii) eine Zusammensetzung, umfassend Acrylpolymere und ein Vernetzungsmittel wie Polyhydroxyl- oder Polyaminoverbindungen;
(iv) eine Zusammensetzung, umfassend einen nicht reduzierenden Zucker und/oder einen gehärteten Zucker und einen Polycarbonsäurereaktanten wie Zitronensäure; und
(v) eine Zusammensetzung, umfassend eine Aminoamidverbindung, die insbesondere aus der Reaktion eines Anhydrids mit Alkanolamin resultiert.

13. Verfahren nach Anspruch 12, wobei die erste Bindemittelzusammensetzung und die zweite Bindemittelzusammensetzung aus wässrigen Zusammensetzungen ausgewählt werden, die aus Zusammensetzungen des Typs (i) bis (v) ausgewählt werden, vorausgesetzt, dass die zweite Bindemittelzusammensetzung eine Bindemittelzusammensetzung eines unterschiedlichen Typs als die erste Bindemittelzusammensetzung ist.

14. Verfahren nach einem der Ansprüche 12 oder 13, wobei die erste Bindemittelzusammensetzung aus wässrigen Zusammensetzungen ausgewählt wird, die aus Zusammensetzungen des Typs (i) oder (ii) ausgewählt werden, und die zweite Bindemittelzusammensetzung aus wässrigen Zusammensetzungen ausgewählt wird, die aus Zusammensetzungen des Typs (iii), (iv) oder (v) ausgewählt werden.

15. Verfahren nach einem der Ansprüche 1 bis 14, wobei eine der Bindemittelzusammensetzungen ein hell gefärbtes oder weißes Bindemittel ergibt, vorzugsweise wobei die erste Bindemittelzusammensetzung ein gefärbtes Bindemittel ergibt und die zweite Bindemittelzusammensetzung ein hell gefärbtes, insbesondere weißes Bindemittel ergibt.

## Revendications

1. Procédé permettant de produire des composites de laine minérale, dans lequel de l'eau de circulation utilisée pour le nettoyage d'un appareil de production permettant de produire des composites de laine minérale est filtrée pour réutiliser l'eau de circulation dans l'appareil de production, le procédé comprenant les étapes (a) à (c) suivantes, dans cet ordre :
(a) la production d'un premier composite de laine minérale en extrayant au moins une partie de l'eau de circulation pour préparer une première composition de liant contenant l'eau de circulation extraite, puis en pulvérisant la première composition de liant sur des fibres minérales, tout en introduisant de l'eau propre dans l'eau de circulation ;
(b) la réalisation des sous-étapes (b1) et (b2) suivantes, dans n'importe quel ordre ou en même temps,
(b1) l'interruption de l'extraction de l'eau de circulation pour la préparation de la première composition de liant ;
(b2) l'extraction d'au moins une partie de l'eau de circulation pour stocker l'eau de circulation extraite dans un premier réservoir ;
(c) la production d'un deuxième composite de laine minérale en extrayant au moins une partie de l'eau de circulation pour préparer une deuxième composition de liant contenant l'eau de circulation extraite, puis en pulvérisant la deuxième composition de liant sur des fibres minérales, tout en introduisant de l'eau propre dans l'eau de circulation,
dans lequel la première composition de liant et la deuxième composition de liant sont différentes l'une de l'autre.

2. Procédé selon la revendication 1, dans lequel l'étape (b) est réalisée pendant la production du premier composite de laine minérale et/ou du deuxième composite de laine minérale.

3. Procédé selon la revendication 1 ou 2, dans lequel l'étape (b) comprend la réalisation de la sous-étape (b3) suivante , ainsi que des sous-étapes (b1) et (b2), dans n'importe quel ordre ou en même temps :
(b3) l'introduction d'eau propre pour préparer la première ou la deuxième composition de liant comprenant l'eau propre.

4. Procédé selon l'une quelconque des revendications 1 à 3, dans lequel l'étape (b) comprend la réalisation de la sous-étape (b4) suivante, ainsi que des sous-étapes (b1) et (b2), dans n'importe quel ordre ou en même temps :
(b4) l'interruption de l'introduction de l'eau propre dans l'eau de circulation.

5. Procédé selon l'une quelconque des revendications 1 à 4, dans lequel l'étape (c) comprend en outre la sous-étape (c1) suivante :
(c1) l'introduction de l'eau stockée dans le premier réservoir dans l'eau de circulation.

6. Procédé selon l'une quelconque des revendications 1 à 5, dans lequel l'étape (c) comprend en outre la sous-étape (c2) suivante :
(c2) l'introduction de l'eau stockée dans le premier réservoir et de l'eau de circulation pour préparer la deuxième composition de liant.

7. Procédé selon l'une quelconque des revendications 1 à 6, dans lequel le procédé comprend, après l'étape (c), une étape (d) supplémentaire dans laquelle les sous-étapes (d1) et (d2) suivantes sont effectuées dans n'importe quel ordre ou en même temps,
(d1) l'interruption de l'extraction de l'eau de circulation pour la préparation de la deuxième composition de liant ;
(d2) l'extraction d'au moins une partie de l'eau de circulation pour stocker l'eau de circulation extraite dans un second réservoir.

8. Procédé selon la revendication 7, dans lequel les premier et second réservoirs sont le même réservoir.

9. Procédé selon la revendication 7, dans lequel les premier et second réservoirs sont des réservoirs séparés.

10. Procédé selon l'une quelconque des revendications 7 à 9, dans lequel le procédé comprend en outre l'étape suivante après l'étape (d) :
(a)' la production d'un troisième composite de laine minérale en extrayant au moins une partie de l'eau de circulation pour préparer une troisième composition de liant contenant l'eau de circulation extraite, puis en pulvérisant la troisième composition de liant sur des fibres minérales, tout en introduisant de l'eau propre dans l'eau de circulation.

11. Procédé selon la revendication 10, dans lequel la troisième composition de liant et le troisième composite de laine minérale sont identiques à la première composition de liant et au premier composite de laine minérale, respectivement.

12. Procédé selon l'une quelconque des revendications 1 à 11, dans lequel l'une des compositions de liant est choisie parmi des compositions aqueuses choisies parmi :
(i) une composition comprenant des condensats phénol/formaldéhyde, telle qu'une composition comprenant des condensats phénol/formaldéhyde et urée/formaldéhyde, une composition comprenant des condensats phénol/formaldéhyde et phénol/formaldéhyde/glycine, ou une composition comprenant des condensats phénol/formaldéhyde et exempte de condensats urée/formaldéhyde ;
(ii) une composition comprenant des réactifs de Maillard, y compris une amine et un hydrate de carbone, en particulier un réducteur ;
(iii) une composition comprenant des polymères acryliques et un agent de réticulation tel que des composés polyhydroxyle ou polyamino ;
(iv) une composition comprenant un sucre non réducteur et/ou un sucre hydrogéné, et un réactif polycarboxylique tel que l'acide citrique ; et
(v) une composition comprenant un composé amino-amide résultant, en particulier, de la réaction d'un anhydride avec une alcanolamine.

13. Procédé selon la revendication 12, dans lequel la première composition de liant et la seconde composition de liant sont choisies parmi des compositions aqueuses choisies parmi une composition de type (i) à (v), à condition que la deuxième composition de liant soit une composition de liant d'un type différent de la première composition de liant.

14. Procédé selon l'une quelconque des revendications 12 ou 13, dans lequel la première composition de liant est choisie parmi des compositions aqueuses choisies parmi des compositions de type (i) ou (ii), et la deuxième composition de liant est choisie parmi des compositions aqueuses choisies parmi des compositions de type (iii), (iv), ou (v).

15. Procédé selon l'une quelconque des revendications 1 à 14, dans lequel l'une des compositions de liant donne un liant légèrement coloré ou blanc, de préférence la première composition de liant donne un liant coloré et la deuxième composition de liant donne un liant légèrement coloré, en particulier blanc.
